# EUROPÄISCHE PATENTSCHRIFT

(11) **EP 2 796 758 B1**
(45) Veröffentlichungstag und Bekanntmachung des Hinweises auf die Patenterteilung: **07.12.2016**
(21) Anmeldenummer: 13164946.9
(22) Anmeldetag: 23.04.2013
(51) Int. Cl.: F16L 37/088, F16L 37/14

(54) **KUPPLUNG**
COUPLING
COUPLAGE

(43) Veröffentlichungstag der Anmeldung: 29.10.2014
(73) Patentinhaber: TI Automotive (Fuldabrück) GmbH, 34277 Fuldabrück (DE)
(72) Erfinder: Barthel, Iris, 34270 Schauenburg (DE); Bol, Alexander, 34225 Baunatal, Guntershausen (DE); Jensen, Hans, 73265 Dettingen unter Teck (DE)
(74) Vertreter: Rohmann, Michael

(56) Entgegenhaltungen:
- EP-A1- 0 593 937
- EP-A2- 1 719 944
- EP-A2- 1 892 450
- US-A- 5 683 117
- US-A1- 2003 052 484

## Beschreibung

Die Erfindung betrifft eine Kupplung, insbesondere eine Kupplung für eine Fluidleitung vorzugsweise eines Kraftfahrzeugs, mit einem Kupplungskörper und einem Rückhalter, wobei der Kupplungskörper eine Bohrung aufweist, welche Bohrung sich von einem Steckelementaufnahmeende des Kupplungskörpers erstreckt, wobei der Kupplungskörper im montierten Zustand ein Steckelement funktionsfähig aufnimmt, welches Steckelement sich durch die Eingangsöffnung des Kupplungskörpers in die Bohrung erstreckt, wobei der Rückhalter ein Querelement aufweist, an welchem Querelement zwei voneinander beabstandete Halteschenkel angeschlossen sind, wobei zwischen den Halteschenkeln zumindest ein Sicherungsarm an das Querelement angeschlossen ist, wobei der Rückhalter in radialer Richtung in Bezug auf die Bohrung an dem Kupplungskörper verschiebbar gelagert ist, wobei in einer Ausgangsposition, wenn das Steckelement nicht bzw. unvollständig in den Kupplungskörper eingeführt ist, ein freies Ende eines Halteschenkels an einer kupplungskörperseitigen Blockierfläche anliegt und ein Verlagern des Rückhalters in den Kupplungskörper in eine Sicherungsposition blockiert ist, wobei das Querelement in der Ausgangsposition im Wesentlichen aus dem Kupplungskörper herausragt.

Kupplungen der vorstehend genannten Art sind aus der Praxis grundsätzlich bekannt. Dabei hat es sich bewährt, einen Rückhalter zum Sichern eines Steckelements in einen Kupplungskörper einzuführen. Aus EP 1 719 944 B1 ist darüber hinaus bekannt, einen Rückhalter mit einem Anzeigeelement zu kombinieren, wobei das Anzeigeelement eine ordnungsgemäße bzw. funktionsfähige Verbindung zwischen dem Steckelement und dem Kupplungskörper anzeigt. Solche Kupplungssysteme haben sich in der Praxis grundsätzlich bewährt. Es ist jedoch erstrebenswert, den Aufbau einer Fluidkupplung ohne Einbußen bei der Funktionsfähigkeit hinnehmen zu müssen, zu vereinfachen.

Der Erfindung liegt daher das technische Problem zugrunde, eine Kupplung der eingangs genannten Art anzugeben, die sich durch einen einfachen Aufbau, eine hohe Zuverlässigkeit und problemlose Montierbarkeit auszeichnet.

Zur Lösung des technischen Problems lehrt die Erfindung eine Kupplung der eingangs genannten Art, die dadurch gekennzeichnet ist, dass zumindest ein freies Ende eines Halteschenkels in einem kupplungskörperseitigen Aufnahmeschacht angeordnet ist, wenn das Steckelement funktionsfähig in den Kupplungskörper eingeführt ist und der Rückhalter in eine Sicherungsposition verlagert ist und dass das Querelement in der Sicherungsposition zur Anzeige des montierten Zustands im Wesentlichen in einer Querelementaufnahme des Kupplungskörpers angeordnet ist, dass der Sicherungsarm ein Sicherungselement aufweist, welches Sicherungselement in der Ausgangsposition mit einem kupplungskörperseitigen, komplementären Sicherungselement zusammenwirkt und den Rückhalter vorzugsweise reversibel in dem Kupplungskörper sichert.

Die Kupplung ist beispielsweise eine Schnellanschlusskupplung (quick connector). Vorzugsweise ist die Kupplung in einer Fluidleitung verwendbar, welche Fluidleitung in einem SCR-System, einem Kraftstoffleitungssystem oder einem Bremsleitungssystem angeordnet ist. Besonders bevorzugt wird die Kupplung in einem Fluidleitungssystem zur Durchleitung von Harnstofflösungen eines SCR-System (Selectiv Catalytic Reduction-System) verwendet.

Es liegt im Rahmen der Erfindung, dass der Kupplungskörper (Gehäuse) einteilig oder mehrteilig ausgebildet ist. Gemäß einer Ausführungsform wird der Kupplungskörper von einem Dichtungsteil und einem von dem Dichtungsteil separaten Anschlussteil gebildet, wobei es möglich ist, dass das Dichtungsteil und das Anschlussteil vorzugsweise einstückig miteinander verbunden sind. Empfohlenermaßen besteht der Kupplungskörper im Wesentlichen aus einem Kunststoff, beispielsweise aus einem Polyphthalamid (PPA) oder einem Metall, beispielsweise aus Aluminium. Zweckmäßigerweise ist das Steckelementaufnahmeende (Eingangsöffnung) in dem Dichtungsteil angeordnet. Vorzugsweise ist in dem Anschlussteil eine Ausgangsöffnung (Austrittsöffnung) angeordnet, wobei sich die Bohrung (Durchgangsbohrung) von der Eingangsöffnung zur Ausgangsöffnung erstreckt. Die Durchgangsbohrung kann gerade oder gewinkelt ausgebildet sein. Eine Längsachse der Bohrung erstreckt sich insbesondere von der Eingangsöffnung zur Austrittsöffnung. Vorzugsweise verfügt das Anschlussteil über einen Anschlussabschnitt, an den beispielsweise eine Rohrleitung, ein Schlauch oder ein Tank oder dergleichen angeschlossen ist. Bevorzugt ist in dem Dichtungsteil zumindest ein Dichtungselement angeordnet, welches Dichtungselement im montierten Zustand der Kupplung fluiddicht an dem Steckelement anliegt.

Das Steckelement ist besonders bevorzugt das Ende eines zweckmäßigerweise starren Rohres, welches Rohr vorteilhafterweise einen kreisrunden Querschnitt aufweist. Es empfiehlt sich, dass auf dem Rohr eine radial vergrößerte Stauchung angeordnet ist, welche Stauchung einen größeren Querschnitt als das bevorzugt starre Rohr aufweist. Die Stauchung verfügt im Rahmen der Erfindung über eine radiale Stoßfläche und eine im Wesentlichen axiale Umlauffläche. Ein freies Ende des Steckelements ist durch die Eingangsöffnung in den Kupplungskörper, vorzugsweise in Einsteckrichtung, einführbar. Axial meint insbesondere eine Ausrichtung parallel bzw. ungefähr parallel zur Längsachse der Bohrung, radial meint im Rahmen der Erfindung quer bzw. ungefähr quer zur Längsachse der Bohrung.

Der Rückhalter ist besonders bevorzugt ein Rückhalter des Hufeisentyps. Gemäß einer besonders bevorzugten Ausführungsform ist der Rückhalter einstückig bzw. als ein Bauteil ausgebildet. Ein Halteschenkel des Rückhalters verfügt über einen elastischen Federabschnitt und einen Halteabschnitt, wobei bevorzugt lediglich der Federabschnitt eine reversible Verformung des Halteschenkels erlaubt. Die Halteschenkel ragen ausgehend von dem Querelement weiter in den Kupplungskörper hinein als der bzw. die Sicherungsarme. Es liegt im Rahmen der Erfindung, dass das Querelement (Querbalken) des Rückhalters auf seiner der Bohrung abgewandten Seite eine Kontur aufweist, die der Kontur des Kupplungskörpers im Wesentlichen entspricht. Eine Spannweite des Querelements ist bevorzugt größer als ein Abstand der Halteschenkel, wobei die Halteschenkel gemäß einer Ausführungsform beabstandet von Endbereichen des Querelements angeordnet sind.

Dass das Querelement in der Ausgangsposition im Wesentlichen aus dem Kupplungskörper herausragt, meint insbesondere, dass das Querelement vollständig bzw. im Wesentlichen vollständig außerhalb des Kupplungskörpers angeordnet ist oder dass lediglich ein Teil des Querelements in der Ausgangsposition in der Querelementaufnahme angeordnet ist. Durch eine in Richtung der Bohrung orientierte Druckbeaufschlagung bzw. eine radiale Druckbeaufschlagung in Bezug auf die Bohrung des Querelements ist der Rückhalter aus einer sichtbaren Position bzw. Ausgangsposition in die Sicherungsposition überführbar, wenn das Steckelement funktionsfähig in den Kupplungskörper aufgenommen ist. Dass das Steckelement funktionsfähig in dem Kupplungskörper aufgenommen ist, meint vorzugsweise, dass ein Abschnitt des bevorzugt starren Rohrs des Steckelements fluiddicht in dem Kupplungskörper insbesondere in dem Dichtungsteil des Kupplungskörpers aufgenommen ist und die Stauchung des Steckelements von den Halteschenkel des Rückhalters hintergriffen wird. Dieser Zustand wird vorzugsweise als montierter Zustand bezeichnet. Besonders bevorzugt ist der Rückhalter im montierten Zustand zwischen der Eingangsöffnung des Kupplungskörpers und der Stauchung des Steckelements angeordnet.

Im montierten Zustand befindet sich der Rückhalter in der Sicherungsposition, wobei in der Sicherungsposition das Querelement im Wesentlichen in der Querelementaufnahme angeordnet ist. Vorzugweise befindet sich der Rückhalter in der Sicherungsposition in einer eingedrückten Position. Dass das Querelement in der Sicherungsposition im Wesentlichen in der Querelementaufnahme angeordnet ist, meint bevorzugt, dass das Querelement größtenteils und vorzugsweise vollständig in der Querelementaufnahme aufgenommen ist. Empfohlenermaßen ist ein Teil des Querelements, welches Teil des Querelements in der Sicherungsposition in der Querelementaufnahme angeordnet ist, größer als ein Teil des Querelements, welcher Teil des Querelements in der Ausgangsposition in der Querelementaufnahme befindlich sein kann.

Vorteilhafterweise weist jeder Halteschenkel ein freies Ende auf, welche freien Enden in der Ausgangsposition jeweils an einer kupplungskörperseitigen Blockierfläche anliegen. Besonders bevorzugt sind die freien Enden der Halteschenkel nicht miteinander verbunden. Zweckmäßigerweise ist der Federabschnitt des Halteschenkels an das Querelement angeschlossen, wobei an den Federabschnitt der Halteabschnitt angeformt ist. Das freie Ende eines Halteschenkels ist im Rahmen der Erfindung an dem dem Federabschnitt abgewandten Ende des Halteabschnitts angeordnet. Der Kupplungskörper verfügt über einen Blockiervorsprung, an welchem Blockiervorsprung zwei Blockierflächen angeordnet sind, wobei jedem Halteschenkel bzw. jedem freien Ende eines Halteschenkels jeweils eine Blockierfläche zugeordnet ist. In Bezug auf die Bohrung ist der Blockiervorsprung diametral gegenüber der Querelementaufnahme in dem Kupplungskörper angeordnet. Es liegt im Rahmen der Erfindung, dass die Länge eines Halteschenkels von dem Querelement zu dem freien Ende größer ist als der Durchmesser der Bohrung. In der Ausgangsposition liegen die Halteschenkel jeweils derart an einer Blockierfläche an, dass die Halteschenkel bevorzugt die Bohrung flankieren und dass die Halteabschnitte der Halteschenkel jeweils abschnittsweise in die Bohrung hineinragen. Der Abstand zwischen den in die Bohrung hineinragenden Abschnitten der Halteschenkel ist in der Ausgangsposition vorzugsweise kleiner als der Durchmesser der Stauchung des Steckelements.

Vorteilhafterweise sind die kupplungskörperseitigen Aufnahmeschächte derart bemessen, dass durch die Aufnahmeschächte eine radiale Verlagerung der Halteschenkel in der Sicherungsposition in Bezug auf die Durchgangsbohrung verhindert bzw. im Wesentlichen verhindert wird. Zweckmäßigerweise sind Querschnitte der Aufnahmeschächte gegebenenfalls geringfügig größer als Querschnitte der freien Enden der Halteschenkel, um insbesondere ein problemloses Einführen der freien Enden in den dem jeweiligen, freien Ende zugeordnete Aufnahmeschacht zu ermöglichen. Durch eine Druckbeaufschlagung des Fluidsystems im montierten Zustand der Kupplung wird das Steckelement in Richtung der Eingangsöffnung bzw. entgegen der Einsteckrichtung mit einer Druckkraft beaufschlagt. Dadurch, dass vorteilhafterweise die freien Enden in der Sicherungsposition des Rückhalters in den Aufnahmeschächten angeordnet sind, ist eine radiale Spreizung der Halteschenkel ausgeschlossen, insbesondere wenn die Stauchung gegen den Rückhalter gedrückt wird. In der Sicherungsposition ist der Abstand zwischen den Halteschenkeln bzw. zwischen den in die Bohrung angeordneten Halteabschnitten der Halteschenkel kleiner als der Durchmesser der Stauchung.

Zweckmäßigerweise ist auf eine eingangsöffnungsseitige Oberfläche eines Halteschenkels und/oder Sicherungsarms vorzugsweise jedes Halteschenkels und/oder jedes Sicherungsarms zumindest ein Anlagevorsprung mit einer parallel bzw. ungefähr parallel zur Einsteckrichtung des Steckelement orientierten, seitlichen Vorsprungsfläche angeordnet, welche seitliche Vorsprungsfläche in der Sicherungsposition an einer kupplungskörperseitigen, komplementären Vorsprungsfläche anliegt bzw. an kupplungskörperseitigen, komplementären Vorsprungsflächen anliegen. Besonders bevorzugt sind die Vorsprungsflächen und/oder komplementären Vorsprungsflächen gebogen ausgebildet, wobei die Vorsprungsflächen der Halteschenkel und/oder der Sicherungsarme auf einer Kreisbahn liegen. Vorzugsweise durch eine Druckbeaufschlagung des Fluidsystems bzw. eines von der Bohrung gebildeten Strömungskanals der Kupplung wird das Steckelement und die Stauchung des Steckelements gegen den Rückhalter gepresst, so dass der Rückhalter vorzugsweise in axialer Richtung und entgegen der Einsteckrichtung des Steckelements gegen den Kupplungskörper gedrückt wird. Infolge der Druckbeaufschlagung des Rückhalters wird die eingangsöffnungsseitige Oberfläche (Stirnfläche) der Halteschenkel und/oder Sicherungsarme gegen eine der Eingangsöffnung abgewandte Oberfläche des Kupplungskörpers gepresst, so dass die rückhalterseitige Vorsprungsfläche bzw. Vorsprungsflächen zur vorzugsweise formschlüssigen Anlage an komplementäre, kupplungskörperseitige Vorsprungsflächen kommen. Auf diese Weise wird ein Verlagern des Rückhalters aus der Sicherungsposition in Richtung der Ausgangsposition im montierten Zustand verhindert, wenn insbesondere betriebsbedingt in einem Innenraum des Kupplungskörpers bzw. in der Bohrung des Kupplungskörpers ein Druck (Betriebsdruck) anliegt, welcher Betriebsdruck vorzugsweise höher als der Druck der die Kupplung umgebenden Atmosphäre ist. Vorteilhafterweise ist die rückhalterseitige Vorsprungsfläche von der kupplungskörperseitigen, komplementären Vorsprungsfläche trennbar, wenn der Rückhalter in axialer Richtung bzw. in Einsteckrichtung des Steckelements von der Eingangsöffnung weggedrückt wird. Ein axialer Verschiebeweg des Rückhalters parallel zur Einsteckrichtung (axiale Richtung) ist ungefähr so lang wie die axiale Ausdehnung der Vorsprungsfläche. Axiale Ausdehnung meint insbesondere eine Ausdehnung der rückhalterseitigen, seitlichen Anlageflächen in Einsteckrichtung.

Es liegt im Rahmen der Erfindung, dass die Halteschenkel jeweils auf der der Eingangsöffnung zugewandten Stirnfläche eine vorzugsweise konische Einführfläche aufweisen. Zweckmäßigerweise erstrecken sich die Einführflächen radial nach innen und neigen sich in axialer Richtung in Richtung der Austrittsöffnung. Radial nach innen meint vorzugsweise in Richtung der Längsachse der Bohrung. Eine Beaufschlagung der Einführflächen mit der Stauchung des Steckelementes bewirkt bevorzugt eine Spreizung der Halteschenkel und eine Verlagerung des Rückhalters in radialer Richtung aus der Ausgangsposition in eine Freigabeposition, wobei empfohlenermaßen das Querelement des Rückhalters bei der Verlagerung des Rückhalters aus der Ausgangsposition in die Freigabeposition von dem Kupplungskörper in radialer Richtung weg verlagert wird. In der Freigabeposition ist ein Abstand zwischen den in die Bohrung hineinragenden Halteabschnitten der Halteschenkel zumindest so groß wie der Durchmesser der Stauchung des Steckelements. In der Freigabeposition weisen die Halteschenkel im Bereich der Bohrung einen maximalen Abstand voneinander auf, wobei zur Überführung der Halteschenkel aus der Ausgangsposition in die Freigabeposition vorzugsweise lediglich der Federabschnitt gespannt und/oder elastisch ausgelenkt wird. In der Freigabeposition werden die Halteschenkel, vorzugsweise durch die Federabschnitte, in Richtung der Längsachse der Bohrung gedrückt, wobei die Federabschnitte in der Ausgangsposition der Halteschenkel vorzugsweise entspannt bzw. spannungsfrei sind.

Es liegt im Rahmen der Erfindung, dass durch eine Beaufschlagung der Einführflächen der Halteschenkel mit der Stauchung des Steckelements der Rückhalter in axialer Richtung in Richtung der Ausgangsöffnung verlagert ist, so dass vorzugsweise die rückhalterseitigen Vorsprungsflächen von den kupplungskörperseitigen, komplementären Vorsprungsflächen freikommen. Eine Beaufschlagung der Einführflächen mit der Stauchung bewirkt vorteilhafterweise, dass der Rückhalter mit dem Querelement ausgehend von der Ausgangsposition in radialer Richtung aus dem Kupplungskörper herausgedrückt wird. In der Freigabeposition ist das Querelement empfohlenermaßen weitest möglich aus der Querelementaufnahme gehoben, wobei der Sicherungsarm bzw. die Sicherungsarme ein Entfernen des Rückhalters aus dem Kupplungskörper ausschließt bzw. ausschließen.

Gemäß einer Ausführungsform weisen die Halteschenkel jeweils zumindest einen rückwärtigen (austrittsöffnungsseitigen) Sicherungsabschnitt auf, welche Sicherungsabschnitte in der Sicherungsposition an der Stauchung des Steckelements anliegen. Die Sicherungsabschnitte verfügen vorzugsweise jeweils über eine Vertiefung, wobei in der Vertiefung eine quer zur Einsteckrichtung angeordnete Lagerfläche bevorzugt im montierten Zustand bzw. in der Sicherungsposition des Rückhalters, zweckmäßigerweise an der Stoßfläche des Steckelements anliegt. Es empfiehlt sich, dass die Sicherungsabschnitte jeweils parallel zur Einsteckrichtung orientierte, die Lagerfläche begrenzende vorzugsweise bogenförmige Mantelflächen aufweisen, welche Mantelflächen zweckmäßigerweise in der Sicherungsposition an der Umfangsfläche der Stauchung anliegen.

Es ist möglich, dass die Halteschenkel jeweils einen erster Sicherungsabschnitt und einen zweiten Sicherungsabschnitt aufweisen, wobei die Sicherungsabschnitte jeweils eine quer zur Einsteckrichtung des Steckelements orientierte Lagerfläche und eine parallel bzw. im Wesentlichen parallel zur Einsteckrichtung orientierte Mantelfläche aufweisen. Zweckmäßigerweise sind die zweiten Sicherungsabschnitte jeweils zwischen dem ersten Sicherungsabschnitt und dem freien Ende der Halteschenkel, vorzugsweise der Halteabschnitte angeordnet. Gemäß einer Ausführungsform liegen die vorzugsweise bogenförmigen Mantelflächen der ersten Sicherungsabschnitte jeweils auf einer ersten Kreisbahn, welche erste Kreisbahnen von den bevorzugt bogenförmigen Mantelflächen der zweiten Sicherungsabschnitte jeweils gebildeten, zweiten Kreisbahnen verschieden sind. Besonders bevorzugt entspricht der Radius der vorzugsweise bogenförmigen Mantelflächen der ersten und zweiten Sicherungsabschnitte ungefähr dem Radius der Stauchung des Steckelements. Zweckmäßigerweise ist der Rückhalter insbesondere mit Hilfe der Federabschnitte der Halteschenkel aus der Sicherungsposition in radialer Richtung in Bezug auf die Bohrung in den Kupplungskörper verlagerbar, wenn die Stauchung des Steckelements in Einsteckrichtung die Halteschenkel des Rückhalters passiert hat und austrittsöffnungsseitig bzw. auf einer der Eingangsöffnung abgewandten Seite des Rückhalters an dem Rückhalter anliegen.

Gemäß einer Ausführungsform federn die Halteschenkel jeweils in Richtung der Längsachse der Bohrung, wenn das Einsteckelement austrittsöffnungsseitig an dem Rückhalter anliegt und der Rückhalter durch die Federkraftbeaufschlagung der Federabschnitte in radialer Richtung aus der Freigabeposition in eine vorläufige Sicherungsposition federt. In der vorläufigen Sicherungsposition liegen die jeweils ersten Sicherungsabschnitte der Halteschenkel an der Stauchung des Einsteckelements an. Durch eine Druckbeaufschlagung des Querelements bzw. des Rückhalters in Richtung der Längsachse der Bohrung ist der Rückhalter ausgehend von der vorläufigen Sicherungsposition in die Sicherungsposition in radialer Richtung in den Kupplungskörper verlagerbar, wobei in der Sicherungsposition die jeweils zweiten Sicherungsabschnitte der Halteschenkel an der Stauchung des Steckelements anliegen. Ein Verlagern des Rückhalters aus der Freigabeposition in die vorläufige Sicherungsposition und die Sicherungsposition ist im Rahmen der Erfindung ausschließlich dann möglich, wenn das Steckelement vollständig bzw. funktionsfähig in den Kupplungskörper eingeführt ist.

Ist gemäß einer Ausführungsform das Steckelement lediglich derart in den Kupplungskörper eingeführt, dass der stauchungsfreie Abschnitt des Rohres zwischen den Halteschenkeln des Rückhalters angeordnet ist, unterbleibt eine Spreizung der Halteschenkel, so dass die freien Enden der Halteschenkel nicht von den Blockierflächen freikommen und der Rückhalter nicht in die Sicherungsposition verlagerbar ist. Ist beispielsweise die Stauchung zwischen den Halteschenkeln angeordnet, so werden die Halteschenkel gespreizt und der Rückhalter aus der Ausgangsposition in die Freigabeposition gedrückt. Ein Verlagern des Rückhalters aus der Freigabeposition in die Sicherungsposition wird dann vermieden, indem vor Erreichen der vorläufigen Sicherungsposition der Sicherungsarm bzw. die Sicherungsarme zur Anlage an die Stauchung gebracht wird bzw. werden.

Besonders bevorzugt ist der Rückhalter durch eine auf die Bohrung gerichtete Kraftbeaufschlagung des Querelements lediglich aus der Ausgangsposition in die Sicherungsposition verlagerbar, wenn der Rückhalter durch die Spreizung der Halteschenkel mittels der Stauchung des Steckelements in die Freigabeposition geschoben bzw. gehoben ist. Durch das Verlagern des Rückhalters aus der Ausgangsposition in die Freigabeposition werden bevorzugt die freien Enden der Halteschenkel jeweils von den Blockierflächen abgehoben. Das Anheben des Rückhalters aus der Ausgangsposition in die Freigabeposition zeigt zweckmäßigerweise an, dass beim Einstecken des Steckelements in den Kupplungskörper die Stauchung zumindest zwischen den Halteschenkeln des Rückhalters positioniert ist.

Besonders bevorzugt weisen die Halteschenkel jeweils eine Spreizfläche auf, welche Spreizflächen in der Ausgangsposition des Rückhalters an kupplungskörperseitigen, komplementären Spreizflächen anliegen, wobei die komplementären Spreizflächen ausgehend von bohrungsseitigen Enden zu von der Bohrung abgewandten Enden divergierend angeordnet sind. Die kupplungskörperseitigen, komplementären Spreizflächen sind vorzugsweise an einem kupplungskörperseitigen Spreizelement angeschlossen, welches Spreizelement einen beispielsweise trapezförmigen Querschnitt aufweist. Am bohrungsseitigen Ende des Spreizelement ist der Abstand der kupplungskörperseitigen, komplementären Spreizflächen kleiner als der Abstand der komplementären Spreizflächen an dem der Bohrung abgewandten Ende des Spreizelements.

Gemäß einer Ausführungsform gleiten bei einer Verlagerung des Rückhalters aus der Sicherungsposition und/oder Ausgangsposition in die Freigabeposition die Spreizflächen an den kupplungskörperseitigen, komplementären Spreizflächen entlang, so dass eine Spreizkraft auf die Halteschenkel ausübbar ist, wobei die Halteschenkel auseinandergedrückt werden. In der Freigabeposition ist die Stauchung des Steckelements zwischen den Halteschenkeln hindurch in Richtung der Eingangsöffnung verlagerbar. Durch das Spreizen der Halteschenkel wird eine Federenergie insbesondere in den Federabschnitten der Halteschenkel gespeichert, wobei vorteilhafterweise der Rückhalter bedingt durch die in den Federabschnitten gespeicherte Federenergie aus der Freigabeposition in die Sicherungsposition und/oder Ausgangsposition verlagerbar ist. Vorteilhafterweise ist eine Verlagerung des Rückhalters aus der Sicherungsposition und/oder der Ausgangsposition in die Freigabeposition lediglich möglich, wenn beispielsweise durch manuelle Betätigung das Querelement bzw. der Rückhalter aus dem Kupplungskörper gezogen wird.

Empfohlenermaßen sind an das Querelement zwei Sicherungsarme angeschlossen, welche Sicherungsarme voneinander beabstandet sind und jeweils zwischen den Halteschenkeln positioniert sind, wobei an jedem Sicherungsarm ein Sicherungselement angeschlossen ist. Vorzugsweise weist der Kupplungskörper ein Führungselement auf, das in einen zwischen den Sicherungsarmen angeordneten Spalt greift, wenn der Rückhalter in radialer Richtung in Bezug auf die Bohrung zwischen der Ausgangsposition, Freigabeposition und Sicherungsposition reversibel hin und her verlagert wird. Mittels des Führungselements wird eine präzise Führung des Rückhalters sichergestellt, um beispielsweise ein Verkanten oder Verkippen des Rückhalters in dem Kupplungskörper auszuschließen.

Gemäß einer bevorzugten Ausführungsform weist jeder Sicherungsarm an einem vom Querbalken wegragenden Ende ein Kopfteil auf, welches Kopfteil das Sicherungselement trägt und einen Anlageabschnitt aufweist. Vorteilhafterweise liegt das Sicherungselement in der Freigabeposition des Rückhalters an dem kupplungskörperseitigen, komplementären Sicherungselement an, wobei der Anlageabschnitt in der Sicherungsposition an der Stauchung anliegt und das Steckelement redundant zu den Halteschenkeln in der Bohrung sichert. Besonders bevorzugt ist das komplementäre Sicherungselement als eine kupplungskörperseitige Sperrfläche ausgebildet. Das Sicherungselement ist beispielsweise als Vorsprung ausgebildet, welcher Vorsprung in der Freigabeposition an dem als Sperrfläche ausgebildeten, komplementären Sicherungselement anliegt. Befindet sich die Stauchung des Steckelements während des Einsteckens des Steckelements in Einsteckrichtung in den Kupplungskörper zwischen den Halteschenkeln, werden bei einer radialen Druckbeaufschlagung des Querelements in Richtung der Bohrung die Anlageabschnitte der Sicherungsarme zur Anlage an die Umfangsfläche der Stauchung gebracht, so dass eine Verlagerung des Rückhalters aus der Freigabeposition in die Sicherungsposition verhindert wird. In der Sicherungsposition liegt der Anlageabschnitt bzw. liegen die Anlageabschnitte des Sicherungsarms bzw. der Sicherungsarme an dem Rohr und/oder der Stoßfläche der Stauchung des Steckelements an.

Vorzugsweise ist eine axiale Ausdehnung des Sicherungsarms bzw. der Sicherungsarme kleiner als eine axiale Ausdehnung der Halteschenkel. Vorzugsweise entspricht die axiale Ausdehnung des Sicherungsarms bzw. der Sicherungsarme im Wesentlichen der axialen Ausdehnung der Halteschenkel abzüglich der axialen Ausdehnung der Mantelflächen der halteschenkelseitigen Sicherungsabschnitte und/oder abzüglich der axialen Ausdehnung der Vorsprungsflächen. Besonders bevorzugt fluchtet eine ausgangsöffnungsseitige Stirnseite des Sicherungsarms bzw. der Sicherungsarme mit der quer zur Einsteckrichtung des Steckelements orientierten Lagerfläche des ersten und/oder zweiten Sicherungsabschnitts.

Es empfiehlt sich, dass an zumindest einem Sicherungsarm zumindest ein Rastelement angeordnet ist, mit welchem Rastelement der Rückhalter in der Sicherungsposition und/oder der Ausgangsposition bzw. Freigabeposition mit dem Kupplungskörper verrastbar ist. Das Rastelement ist beispielsweise als Kugelabschnitt bzw. Halbkugel ausgebildet. Es empfiehlt sich, dass an beiden Sicherungsarmen jeweils ein Rastelement vorgesehen ist. Die Rastelemente sind im Rahmen der Erfindung insbesondere an Außenflächen der Sicherungsarme angeordnet, welche Außenflächen von dem zwischen den Sicherungsarmen angeordneten Spalt wegweisen. Zweckmäßigerweise liegt das Rastelement bzw. liegen die Rastelemente in der Ausgangsposition des Rückhalters auf einer der Bohrung abgewandten Oberfläche des Spreizelements auf. Es liegt im Rahmen der Erfindung, dass in der Sicherungsposition des Rückhalters das Rastelement des Sicherungsarms bzw. die Rastelemente der Sicherungsarme bohrungsseitig in dem Spreizelement angeordnet ist bzw. angeordnet sind und/oder bohrungsseitig an der Sperrfläche anliegt bzw. anliegen. Durch das Rastelement bzw. die Rastelemente wird zusätzlich angezeigt, ob sich der Rückhalter in der Ausgangsposition oder Sicherungsposition befindet.

Vorzugsweise weist das Querelement zumindest ein Manipulierelement auf, wobei durch eine Kraftausübung auf das Manipulierelement eine Verlagerung des Rückhalters aus der Sicherungsposition in die Freigabeposition und/oder aus der Freigabeposition in die Sicherungsposition erfolgt. Das Manipulierelement kann ein Griff sein, welcher Griff beispielsweise von einem Bedienpersonal erfassbar ist. Grundsätzlich ist es möglich, dass das Manipulierelement als Eingriffsbereich für ein Werkzeug ausgebildet ist.

Besonders bevorzugt ist das Steckelement lediglich mit dem in der Sicherungsposition befindlichen Rückhalter in dem Kupplungskörper gesichert, wobei der Rückhalter ein Anzeigeelement für die funktionsfähige Aufnahme des Steckelements in den Kupplungskörper ist. Gemäß einer vorteilhaften Ausführungsform liegen die Halteschenkel des Rückhalters jeweils unmittelbar und vorzugsweise ohne Zwischenschaltung weiterer Bauteile am Steckelement an.

Der Erfindung liegt die Erkenntnis zugrunde, dass bei der erfindungsgemäßen Kupplung mit dem Rückhalter ein Steckelement zuverlässig in dem Kupplungskörper sicherbar ist. In vorteilhafter Weise dient der Rückhalter neben der Sicherung des Steckelements in dem Kupplungskörper auch als Anzeigeelement, um eine funktionsfähige bzw. ordnungsgemäße Anordnung des Steckelements in den Kupplungskörper anzuzeigen. Dadurch, dass der Rückhalter neben der Rückhaltefunktion auch die Funktion eines Anzeigeelements übernimmt, kommt die erfindungsgemäße Kupplung mit wenig Bauteilen aus, weswegen sich die erfindungsgemäße Kupplung durch eine überraschend einfache Bauform auszeichnet. Der einfache Aufbau des Kupplungskörpers und des Rückhalters erlaubt zudem einen einhändigen Zusammenbau der Kupplung bzw. des Einfügens eines Steckelements in die Kupplung, zumal der Rückhalter bedingt durch die an den Sicherungsarmen angeordneten Sicherungselemente unverlierbar in dem Kupplungskörper gehalten ist. Unabhängig davon, ob das Steckelement in dem Kupplungskörper angeordnet ist oder nicht, ist ausgeschlossen, dass der Rückhalter beispielsweise durch eine Fehlbedienung aus dem Kupplungskörper herausgezogen wird. Im Rahmen der Erfindung zeigt der Rückhalter den montierten Zustand bzw. die funktionsfähige Aufnahme des Steckelements in dem Kupplungskörper an und sichert im montierten Zustand das Steckelement in mehrfach redundanter Weise in dem Kupplungskörper. Selbst der Ausfall eines Halteschenkels und/oder Haltearmes gefährdet nicht die funktionssichere Aufnahme des Steckelements in den Kupplungskörper.

Nachfolgend wird die Erfindung anhand einer lediglich ein Ausführungsbeispiel darstellenden Zeichnung ergänzend erläutert. Es zeigen schematisch:
- Fig. 1: eine perspektivische Ansicht einer erfindungsgemäßen Kupplung,
- Fig. 2a: eine perspektivische Ansicht der erfindungsgemäßen Kupplung mit einem eingeführten Steckelement und dem Rückhalter in einer vorläufigen Sicherungsposition,
- Fig. 2b: eine perspektivische Ansicht des erfindungsgemäßen Kupplungskörpers mit eingeführtem Steckelement, wobei der Rückhalter in der Sicherungsposition ist,
- Fig. 3a: eine Draufsicht auf den Kupplungskörper der erfindungsgemäßen Kupplung bei der Montage des Rückhalters, wobei der besseren Übersicht halber ein eingangsöffnungsseitiger Kragen des Kupplungskörpers weggelassen wurde,
- Fig. 3b: eine Draufsicht auf den Kupplungskörper gemäß Fig. 3a, wobei Halteschenkel des Rückhalters in den Kupplungskörper eingeführt sind,
- Fig. 3c: eine Draufsicht auf den Kupplungskörper gemäß Fig. 3a mit dem Rückhalter in der Freigabeposition,
- Fig. 3d: eine Draufsicht auf den Kupplungskörper gemäß Fig. 3a, wobei der Rückhalter in der Ausgangsposition ist,
- Fig. 4a: eine Draufsicht auf den Kupplungskörper gemäß Fig. 3a, wobei das Steckelement teilweise in den Kupplungskörper eingeführt ist,
- Fig. 4b: eine Draufsicht auf den Kupplungskörper gemäß Fig. 3a, wobei die Stauchung des Steckelements zwischen den Halteschenkeln des Rückhalters angeordnet ist.
- Fig.4c: eine Draufsicht auf den Kupplungskörper gemäß Fig. 3a mit eingeführtem Steckelement und Rückhalter in der Freigabeposition,
- Fig. 4d: eine Draufsicht auf den Kupplungskörpergemäß Fig. 3a, in den das Steckelement vollständig eingeführt und der Rückhalter in der vorläufigen Sicherungsposition ist,
- Fig. 4e: eine Untersicht des Kupplungskörpers gemäß Fig. 4d,
- Fig. 4f: eine Draufsicht auf den erfindungsgemäßen Kupplungskörper mit dem Steckelement im montierten Zustand und dem Rückhalter in der Sicherungsposition
- Fig. 4g: eine Untersicht des erfindungsgemäßen Kupplungskörpers gemäß Fig. 4f,
- Fig. 5a: eine Draufsicht auf den erfindungsgemäßen Kupplungskörper mit Steckelement, wobei der Rückhalter aus der Sicherungsposition abgehoben ist und
- Fig. 5b: eine Draufsicht auf den erfindungsgemäßen Kupplungskörper gemäß Fig. 5a mit vollständig eingeführtem Steckelement und Rückhalter in der Freigabeposition,

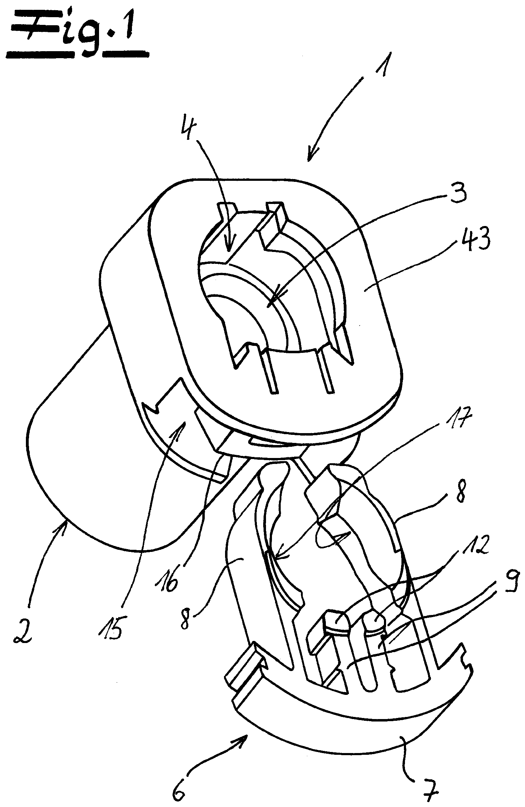

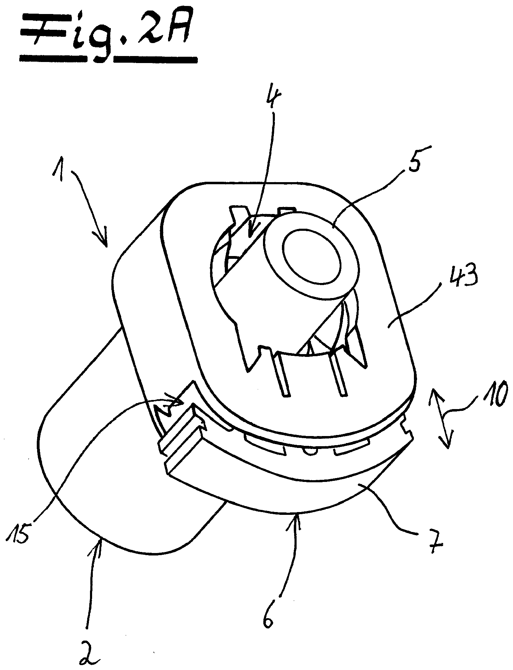

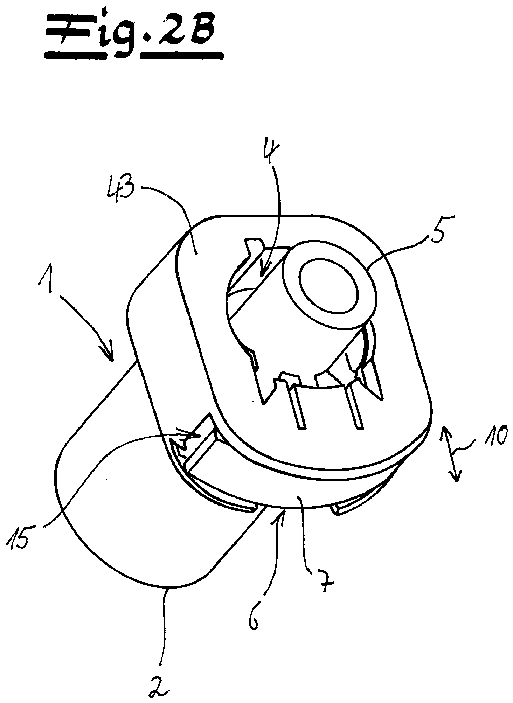

In Fig. 1 ist eine Kupplung 1 mit einem Kupplungskörper 2 dargestellt. Vorzugsweise und gemäß dem Ausführungsbeispiel wird die Kupplung 1 in einem SCR-Leitungssystem verwendet, das in den Figuren nicht dargestellt ist. Der Kupplungskörper 2 weist eine Durchgangsbohrung bzw. Bohrung 3 auf. Die Bohrung 3 erstreckt sich gemäß Fig. 1 ausgehend von einer Eingangsöffnung (Steckelementaufnahmeende) 4 in den Kupplungskörper 2. Gemäß den Fig. 2a und 2b ist in dem Kupplungskörper 2 ein Steckelement 5 aufnehmbar, welches Steckelement 5 mit einem Rückhalter 6 in dem Kupplungskörper 2 festsetzbar ist.

In Fig. 1 ist dargestellt, dass der Rückhalter 6 ein Querelement (Querbalken) 7 aufweist, an welches Querelement 7 zwei Halteschenkel 8 und zwei Sicherungsarme 9 angeschlossen sind, wobei die Sicherungsarme 9 voneinander beabstandet zwischen den Halteschenkeln 8 an den Querbalken 7 angeformt sind. In den Fig. 2a und 2b ist durch den Doppelpfeil 10 symbolisiert, dass der Rückhalter 6 in radialer Richtung in Bezug auf die Bohrung 3 in dem Kupplungskörper 2 verschiebbar gelagert bzw. geführt ist. Das Querelement 7 ist in Fig. 2a im Wesentlichen außerhalb des Kupplungskörpers 2 angeordnet, wodurch gemäß dem Ausführungsbeispiel angezeigt wird, dass das Steckelement 5 durch den Rückhalter 6 nicht in dem Kupplungskörper 2 festgesetzt ist. In Fig. 2b befindet sich der Rückhalter 6 in der Sicherungsposition, wobei in der Sicherungsposition das Querelement 7 im Wesentlichen in einer Querelementaufnahme 15 des Kupplungskörpers 2 aufgenommen ist, wodurch eine funktionsfähige Aufnahme des Steckelements 5 in dem Kupplungskörper 2 angezeigt wird.

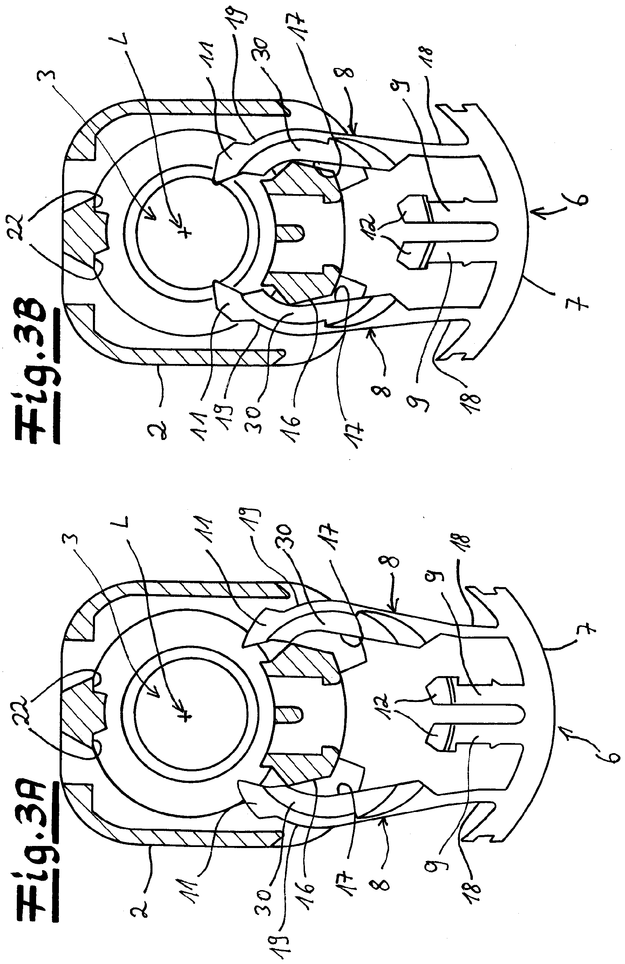

In Fig. 3a ist ein erster Schritt zum Einsetzen des Rückhalters 6 in den Kupplungskörper 2 dargestellt. Durch Aufweiten bzw. Spreizen der Halteschenkel 8 des Rückhalters 6 werden die Halteschenkel 8 jeweils an einem kupplungskörperseitigen Spreizelement 16 vorbeibewegt. Dadurch, dass zum Spreizelement 16 hin orientierte Innenflächen 17 der Halteschenkel 8 gekrümmt ausgebildet sind, ist bei dem in Fig. 3b dargestellten Einführzustand des Rückhalters 6 in den Kupplungskörper 2 sichergestellt, dass der Rückhalter 6 nicht aus dem Kupplungskörper 2 herausfällt. In Fig. 3b ist weiterhin dargestellt, dass die Halteschenkel 8 jeweils einen Federabschnitt 18 und einen Halteabschnitt 19 aufweisen, wobei das Spreizen der Halteschenkel 8 durch das Spreizelement 16 lediglich ein Spannen und Verformen der Federabschnitte 18 des Rückhalters 6 bewirkt.

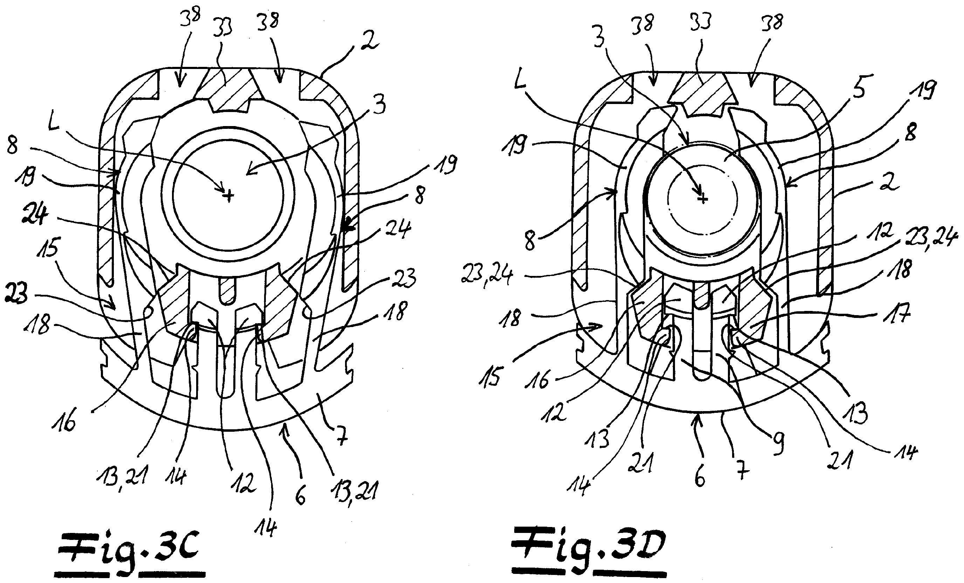

In Fig. 3c ist dargestellt, dass Kopfteile 12 der Sicherungsarme 9 jeweils ein als Vorsprung 13 ausgebildetes Sicherungselement aufweisen, welche Vorsprünge 13 jeweils als kupplungskörperseitige Rastvorsprünge 21 ausgebildete komplementäre Sicherungselemente 14 hintergreifen. Auf diese Weise wird der Rückhalter 6 in dem Kupplungskörper 2 gegen ein unbeabsichtigtes Entfernen gesichert. Vorzugsweise und gemäß dem Ausführungsbeispiel ist der Rückhalter 6 durch ein Zusammendrücken der Sicherungsarme 9 aus dem Kupplungskörper 2 freisetzbar, wobei auf diese Weise die an den Kopfteilen 12 angeordneten Vorsprünge 13 von den Rastvorsprüngen 21 lösbar sind.

In Fig. 3d ist der Kupplungskörper 2 mit dem in der Ausgangsposition befindlichen Rückhalter 6 dargestellt, in welcher Ausgangsposition das Querelement 7 im Wesentlichen außerhalb der Querelementaufnahme15 des Kupplungskörpers 2 angeordnet ist. Freie Enden 11 der Halteschenkel 8 liegen in der Ausgangsposition gemäß Fig. 3d an kupplungskörperseitigen Blockierflächen 22 an, wodurch eine radiale Verlagerung des Rückhalters 6 in Richtung einer Längsachse L der Bohrung 3 in den Kupplungskörper 2 hinein ausgeschlossen wird. Ergänzend ist in Fig. 3d dargestellt, dass an jedem Halteschenkel 8 jeweils eine Spreizfläche 23 angeordnet ist, welche Spreizflächen 23 in der Ausgangsposition des Rückhalters 6 an kupplungskörperseitigen komplementären Spreizflächen 24 anliegen. Die komplementären Spreizflächen 24 sind an dem Spreizelement 16 ausgebildet und divergieren ausgehend von einem durchgangsbohrungsseitigen Ende hin zu einem querelementseitigen Ende. Strichpunktiert ist in Fig. 3d das Steckelement 5 dargestellt.

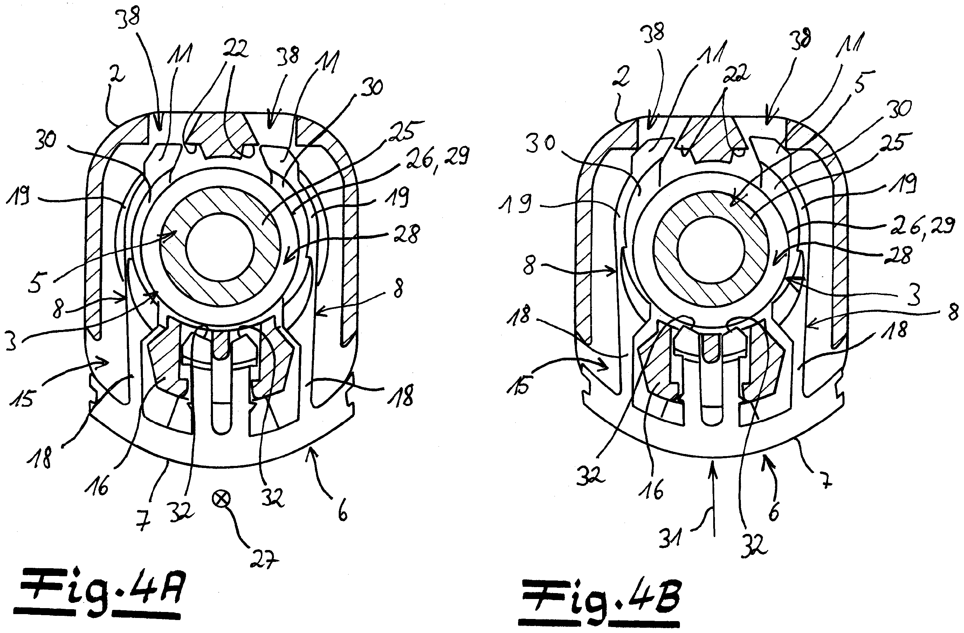

In Fig. 4a ist erkennbar, dass das Steckelement 5 einen Rohrabschnitt 25 mit einer radialen Stauchung 26 aufweist, wobei der Durchmesser der radialen Stauchung 26 größer ist als der Durchmesser bzw. Querschnitt des Rohrabschnitts 25. Quer zur durch den Pfeil 27 gekennzeichneten Einsteckrichtung erstreckt sich eine Stoßfläche 28 der Stauchung 26. In axialer Richtung bzw. parallel zur Einsteckrichtung 27 weist die Stauchung 26 eine Umlauffläche 29 auf. Die Stauchung 26 trifft wie in Fig. 4a dargestellt und gemäß dem Ausführungsbeispiel auf konische Einführflächen 30 des Rückhalters 6, wodurch die Halteschenkel 8 des Rückhalters 6 gespreizt werden. Die Spreizung erfolgt vorzugsweise und gemäß dem Ausführungsbeispiel dadurch, dass die Federabschnitte 18 der Halteschenkel 8 gespannt werden. Durch das Spreizen der Halteschenkel 8 kommen die freien Enden 11 der Halteschenkel 8 von den Blockierflächen 22 frei, was in Fig. 4b dargestellt ist. Die radiale Stauchung 26 ist in Fig. 4b zwischen den gespreizten Halteschenkeln 8 positioniert, wobei die Innenflächen 17 der Halteschenkel 8 an der Stauchung 26 anliegen.

In Fig. 4b ist gezeigt, dass eine Kraftbeaufschlagung des Querelements 7 in Richtung der Bohrung 3 Anlageabschnitte 32 der sicherungsarmseitigen Kopfteile 12 zur Anlage an die Stauchung 26 des Steckelements 5 bringt, so dass das Querelement 7 durch eine mit dem Pfeil 31 symbolisierte Kraftbeaufschlagung nicht in die Querelementaufnahme 15 des Kupplungskörpers 2 verlagerbar ist. Das Steckelement 5 ist gemäß Fig. 4b lediglich unvollständig bzw. nicht funktionsfähig in den Kupplungskörper 2 eingeführt.

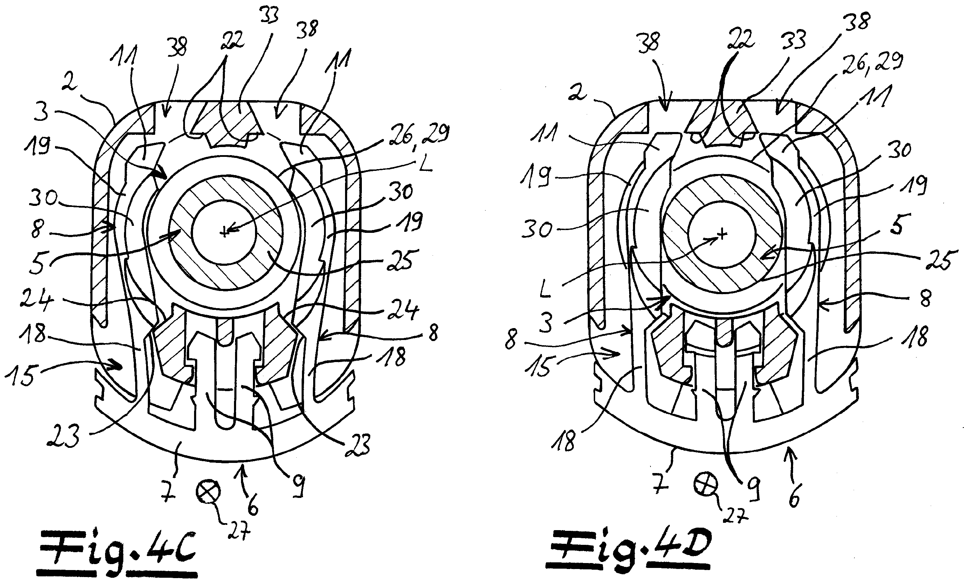

In Fig. 4c befindet sich der Rückhalter 6 in der Freigabeposition. Die Stauchung 26 des Steckelements 5 beaufschlagt die Einführflächen 30 der Halteschenkel 8 derart, dass die Halteschenkel 8 gespreizt werden. Durch die Anlage der halteschenkelseitigen Spreizflächen 23 an den komplementären Spreizflächen 24 wird zudem eine radiale Verschiebung des Rückhalters 6 von der Bohrung 3 des Kupplungskörpers 2 weg verursacht. Infolgedessen befindet sich das Querelement 7 in der in Fig. 4c dargestellten Freigabeposition in einer weitest möglich abgehobenen Position und ist vorzugsweise und gemäß dem Ausführungsbeispiel für einen Betrachter gut sichtbar. Weiterhin ist in Fig. 4c erkennbar, dass die Halteabschnitte 19 der Halteschenkel 8 im Bereich der Bohrung 3 einen derart ausgebildeten Abstand voneinander aufweisen, dass der Abstand zwischen den Halteschenkeln 8 zumindest so groß ist wie der Durchmesser der Stauchung 26 des Steckelements 5.

In Fig. 4d ist dargestellt, dass der Rückhalter 6 aus der Freigabeposition gemäß Fig. 4c in eine vorläufige Sicherungsposition verlagert ist, wobei der Rückhalter 6 in Richtung des Kupplungskörpers 2 bzw. in Richtung der Längsachse L der Bohrung 3 ausgehend von der Sicherungsposition radial verschoben ist. Durch die Stauchung 26 des Steckelements 5 erfahren die Halteschenkel 8 des Rückhalters 6 eine derart bemessene Aufspreizung, dass ein Abstand zwischen den freien Enden 11 der Halteschenkel 8 so groß ist wie eine Breite eines kupplungskörperseitigen Blockierelements 33, an welchem Blockierelement 33 die Blockierflächen 22 angeordnet ist.

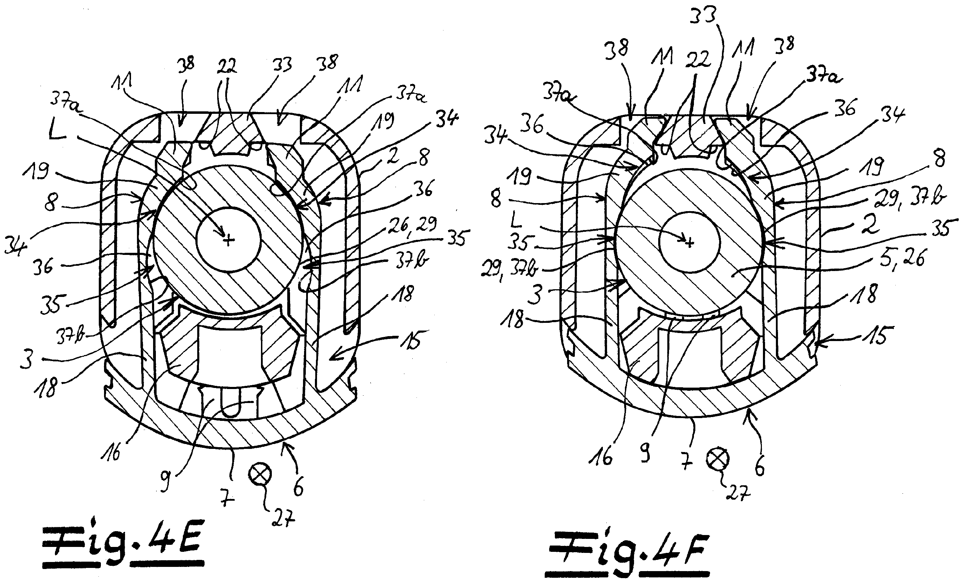

In der Untersicht gemäß den Fig. 4e und 4f ist erkennbar, dass in einer der Einführfläche 30 abgewandten Oberfläche der Halteschenkel 8 jeweils zwei Sicherungsabschnitte 34, 35 angeordnet sind. Jeder Sicherungsabschnitt 34, 35 weist eine quer zur Einsteckrichtung 27 orientierte Lagerfläche 36 und eine parallel zur Einsteckrichtung 27 orientierte Mantelflächen 37a, 37b auf. Es ist erkennbar, dass die Mantelflächen 37a der ersten Sicherungsabschnitte 34 jeweils auf einer ersten Kreisbahn liegen, welche erste Kreisbahn von einer von Mantelflächen 37b der zweiten Sicherungsabschnitte 35 jeweils gebildeten, zweiten Kreisbahn verschieden ist. In der vorläufigen Sicherungsposition gemäß Fig. 4e liegen die Mantelflächen 37a der ersten Sicherungsabschnitte 34 und die Lagerflächen 36 an der Stauchung 26 des Steckelements 5 an.

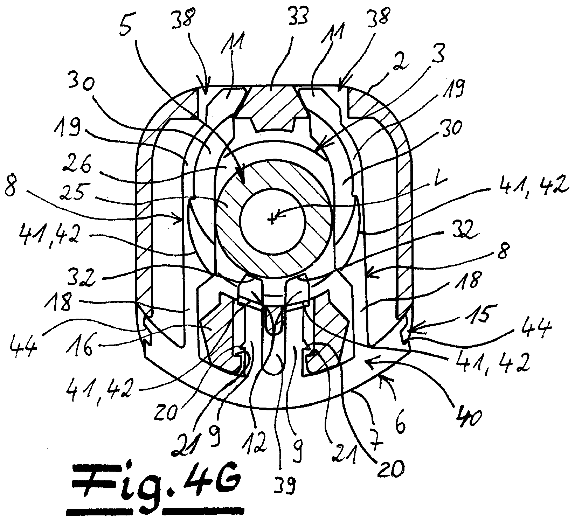

Gemäß Fig. 4f ist das Steckelement 5 funktionsfähig in dem Kupplungskörper 2 aufgenommen. Die Stoßfläche 28 der Stauchung 26 liegt an der Lagerfläche 36 des zweiten Sicherungsabschnitts 35 an, während die Umlauffläche 29 der Stauchung 26 an den Mantelflächen 37b der zweiten Sicherungsabschnitte 35 anliegt. Vorzugsweise und gemäß dem Ausführungsbeispiel werden die Halteschenkel 8 durch die Federabschnitte 18 in radialer Richtung in Bezug auf die Bohrung 3 nach innen bzw. in Richtung der Längsachse L der Bohrung 3 gedrückt, wenn der Rückhalter 6 aus der in Fig. 4d dargestellten vorläufigen Sicherungsposition in die in Fig. 4f dargestellte Sicherungsposition verlagert wird. Bei der Verlagerung des Rückhalters 6 aus der vorläufigen Sicherungsposition in die Sicherungsposition wird die Stauchung 26 von dem ersten Sicherungsabschnitt 34 an den zweiten Sicherungsabschnitt 35 übergeben, wobei bei der Übergabe der Stauchung 26 von dem ersten Sicherungsabschnitt 34 an den zweiten Sicherungsabschnitt 35 die Halteschenkel 8 durch die Federabschnitte 18 zusammengedrückt werden. Die Verkleinerung des Abstands zwischen den Halteschenkeln 8 bewirkt dabei, dass die freien Enden 11 der Halteschenkel 8 in der Sicherungsposition des Rückhalters 6 gemäß Fig. 4f jeweils in einen kupplungskörperseitigen Aufnahmeschacht 38 eingeführt werden. Dies ist auch in der Draufsicht gemäß Fig. 4g dargestellt. Weiterhin ist in Fig. 4g erkennbar, dass die Anlageabschnitte 32 der Sicherungsarme 9 am Rohrabschnitt 25 und der Stauchung 26 des Steckelements 5 anliegen.

Bei der Verlagerung des Rückhalters 6 aus der Freigabeposition in die Sicherungsposition werden darüber hinaus als Rastnasen 20 Rastelemente der Sicherungsarme 9 zur Anlage an das Spreizelement 16 gebracht, so dass die Sicherungsarme 9 unter Verminderung einer Breite des zwischen den Sicherungsarmen 9 angeordneten Spalts 39 zusammengedrückt werden und bei Erreichen der vorläufigen Sicherungsposition wieder auseinanderfedern. Auf diese Weise wird der Rückhalter 6 zusätzlich mit den Rastnasen 20 in der Sicherungsposition an dem Kupplungskörper 2 bzw. hinter Rastvorsprüngen 21 gesichert.

Insbesondere in den Fig. 4f und 4g ist dargestellt, dass das Querelement 7 in der Sicherungsposition des Rückhalters 6 vollständig in der Querelementaufnahme 15 des Kupplungskörpers aufgenommen ist. Dadurch wird angezeigt, dass das Steckelement 5 vollständig und funktionsfähig in dem Kupplungskörper 2 aufgenommen sowie durch den Rückhalter 6 in dem Kupplungskörper 2 festgesetzt ist. In dem in den Fig. 4f und 4g dargestellten, montierten Zustand befindet sich der Rückhalter 6 zwischen der Stauchung 26 und der Eingangsöffnung 4 des Kupplungskörpers 2.

In den Fig. 1 und 4g ist erkennbar, dass auf einer eingangsöffnungsseitigen Oberfläche 40 des Rückhalters 6 auf den Halteschenkel 8 und den Sicherungsarmen 9 jeweils Anlagevorsprünge 41 positioniert sind, welche Anlagevorsprünge 41 auf ihrer der Bohrung 3 abgewandten Seite eine bogenförmige Vorsprungsfläche 42 aufweisen. Die Vorsprungsflächen 42 liegen gemäß dem Ausführungsbeispiel auf einer Kreisbahn. Wird im montierten Zustand gemäß den Fig. 4f und 4g ein Druck in dem Kupplungskörper 2 aufgebaut, wird das Steckelement 5 gegen den Rückhalter 6 gedrückt, so dass der Rückhalter 6 gegen eine rückhalterseitige Oberfläche eines Kragens 43 des Kupplungskörpers 2 gedrückt wird. Der Kragen 43 weist nicht dargestellte und zu den Anlagevorsprüngen 41 komplementäre Ausnehmungen auf, in die die Anlagevorsprünge 41 im montierten Zustand der Kupplung greifen, wenn in dem Kupplungskörper ein Druck aufgebaut ist. Die Vorsprungsflächen 42 liegen bevorzugt und gemäß dem Ausführungsbeispiel an nicht dargestellten komplementären Vorsprungsflächen des Kragens 43 an, wenn die Stauchung 26 und der Rückhalter 6 entgegen der Einsteckrichtung 27 gegen den Kragen 43 gedrückt werden.

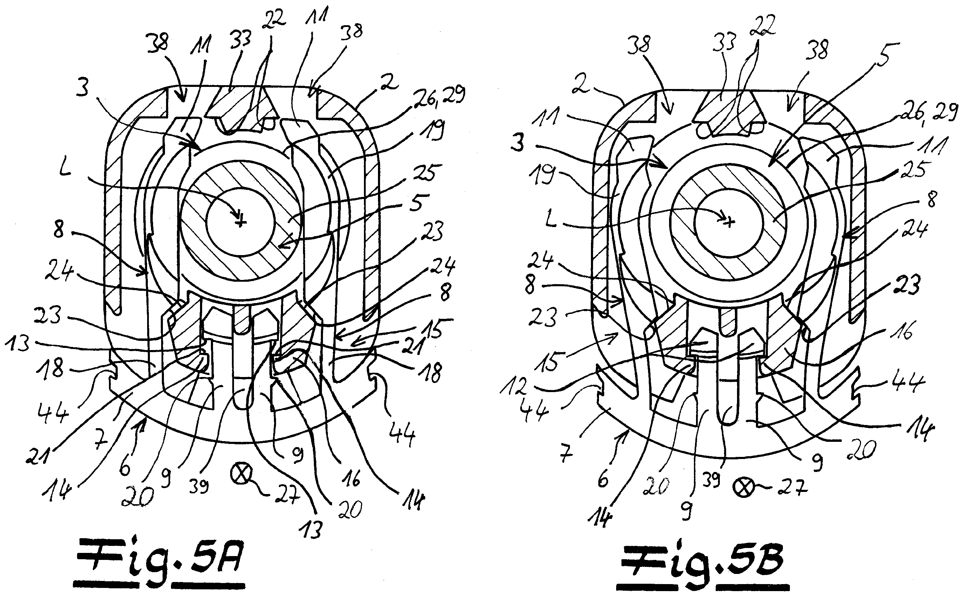

Um das Steckelement 5 aus dem Kupplungskörper 2 zu entfernen, muss der Rückhalter 6 aus der Sicherungsposition gemäß den Fig. 4f, 4g in die Freigabeposition verlagert werden. Dazu verfügt das Querelement 7 des Rückhalters 6 über als Griffelemente 44 ausgebildete Manipulierelemente, mit denen der in der Querelementaufnahme 15 in der Sicherungsposition befindliche Rückhalter 6 ergriffen und in radialer Richtung in Bezug auf die Bohrung 3 aus dem Kupplungskörper 2 aus der Sicherungsposition in die in Fig. 5b dargestellte Freigabeposition verlagerbar ist. Bei dieser Verlagerung werden zunächst die freien Enden 11 der Halteschenkel 8 aus den kupplungskörperseitigen Aufnahmeschächten 38 gehoben und die halteschenkelseitigen Spreizflächen 23 zur Anlage an die spreizelementseitigen, komplementären Spreizflächen 24 gebracht. Dieses ist in Fig. 5a dargestellt. Vorzugsweise und gemäß Fig. 5a ist die Stauchung 26 des Steckelements 5 im ersten Sicherungsabschnitt 34 des Rückhalters 6 positioniert. Ausgehend von der in Fig. 5a dargestellten, vorläufigen Sicherungsposition des Rückhalters 6 in dem Kupplungskörper 2 wird eine radiale Auswärtsbewegung des Rückhalters 6 durch eine Anlage der Vorsprünge 13 der Sicherungsarme 9 an den Rastersprüngen 21 der Sicherungselemente 14 verhindert. In der in Fig. 5b dargestellten Freigabeposition sind die Halteschenkel 8 derart aufgespreizt, dass das Steckelement 5 mit der Stauchung 26 an den Halteschenkeln 8 vorbei in Richtung der Eingangsöffnung 4 entgegen der Einsteckrichtung 27 gleiten und durch die Eingangsöffnung 4 aus dem Kupplungskörper 2 entfernt werden kann. Sobald die von der Bohrung 3 weggerichtete Zugkraft nicht mehr auf das Querelement 7 bzw. den Rückhalter 6 einwirkt, bewirkt die in den Federabschnitten 18 gespeicherte Federenergie ein Zusammendrücken der Halteschenkel 8, sodass der Rückhalter 6 bedingt durch die schräge Ausbildung der Spreizflächen 23 und komplementären Spreizflächen 24 in den Kupplungskörper hinein verlagert wird, wodurch die Federabschnitte 18 entspannt und die freien Enden 11 der Halteschenkel 8 zur Anlage an die Blockierflächen 22 gebracht werden, was ist in der Fig. 3d dargestellt ist.

## Patentansprüche

1. Kupplung, insbesondere Kupplung für eine Fluidleitung vorzugsweise eines Kraftfahrzeugs, mit einem Kupplungskörper (2) und einem Rückhalter (6),
wobei der Kupplungskörper (2) eine Bohrung (3) aufweist, welche Bohrung (3) sich von einem Steckelementaufnahmeende (Eingangsöffnung) (4) des Kupplungskörpers (2) erstreckt, wobei der Kupplungskörper (2) im montierten Zustand ein Steckelement (5) funktionsfähig aufnimmt, welches Steckelement (5) sich durch die Eingangsöffnung (4) des Kupplungskörpers (2) in die Bohrung (3) erstreckt,
wobei der Rückhalter (6) ein Querelement (7) aufweist, an welchem Querelement (7) zwei voneinander beabstandete Halteschenkel (8) angeschlossen sind, wobei zwischen den Halteschenkeln (8) zumindest ein Sicherungsarm (9) an das Querelement angeschlossen ist, wobei der Rückhalter (6) in radialer Richtung in Bezug auf die Bohrung (3) an dem Kupplungskörper (2) verschiebbar gelagert ist,
wobei in einer Ausgangsposition, wenn das Steckelement (5) nicht bzw. unvollständig in den Kupplungskörper (2) eingeführt ist, ein freies Ende (11) eines Halteschenkels (8) an einer kupplungskörperseitigen Blockierfläche (22) anliegt und ein Verlagern des Rückhalters (6) in den Kupplungskörper (2) in eine Sicherungsposition blockiert, wobei das Querelement (7) in der Ausgangsposition im Wesentlichen aus dem Kupplungskörper (2) herausragt,
**dadurch gekennzeichnet,**
**dass** zumindest ein freies Ende (11) eines Halteschenkels (8) in einem kupplungsköperseitigen Aufnahmeschacht (38) angeordnet ist, wenn das Steckelement (5) funktionsfähig in den Kupplungskörper (2) eingeführt ist und der Rückhalter (6) in eine Sicherungsposition verlagert ist und dass das Querelement (7) in der Sicherungsposition zur Anzeige des montierten Zustands im Wesentlichen in einer Querelementaufnahme (15) des Kupplungskörpers (2) angeordnet ist,
**dass** der Sicherungsarm (9) ein Sicherungselement (13) aufweist, welches Sicherungselement (13) in der Ausgangsposition mit einem kupplungsköperseitigen, komplementären Sicherungselement (14) zusammenwirkt und den Rückhalter (6) vorzugsweise reversibel in dem Kupplungskörper (2) sichert.

2. Kupplung nach Anspruch 1, **dadurch gekennzeichnet, dass** die kupplungskörperseitigen Aufnahmeschächte (38) derart bemessen sind, dass durch die Aufnahmeschächte (38) eine radiale Verlagerung der Halteschenkel (8) in Bezug auf die Bohrung (3) verhindert bzw. im Wesentlichen verhindert wird.

3. Kupplung nach Anspruch 1 oder 2, **dadurch gekennzeichnet, dass** auf einer eingangsöffnungsseitigen Oberfläche eines Halteschenkels (8), vorzugsweise jedes Halteschenkels (8) zumindest ein Anlagevorsprung (41) mit einer parallel bzw. ungefähr parallel zur Einsteckrichtung (27) des Steckelements (5) orientierten, seitlichen Vorsprungsfläche (42) angeordnet ist, welche seitliche Vorsprungsfläche (42) in der Sicherungsposition an einer kupplungskörperseitigen, komplementären Vorsprungsfläche anliegt.

4. Kupplung nach einem der Ansprüche 1 bis 3, **dadurch gekennzeichnet, dass** jeder Halteschenkel (8) ein freies Ende (11) aufweist, welche freie Enden (11) in der Ausgangsposition jeweils an einer kupplungskörperseitigen Blockierfläche (22) anliegen und dass die freien Enden (11) in der Sicherungsposition jeweils in einem kupplungskörperseitigen Aufnahmeschacht (38) angeordnet sind.

5. Kupplung nach einem der Ansprüche 1 bis 4, **dadurch gekennzeichnet, dass** die Halteschenkel (8) jeweils eine vorzugsweise konische Einführfläche (30) aufweisen, wobei eine Beaufschlagung der Einführflächen (30) mit einer Stauchung (26) des Steckelements (5), welche Stauchung (26) einen größeren Durchmesser als ein Rohrabschnitt (25) des Steckelements (5) aufweist, eine Spreizung der Halteschenkel (8) und eine Verlagerung des Rückhalters (6) in radialer Richtung aus der Ausgangsposition in eine Freigabeposition bewirkt, wobei das Querelement (7) des Rückhalters (6) bei der Verlagerung des Rückhalters (6) aus der Ausgangsposition in die Freigabeposition von dem Kupplungskörper (2) wegverlagert wird.

6. Kupplung nach einem der Ansprüche 1 bis 5, **dadurch gekennzeichnet, dass** die Halteschenkel (8) jeweils zumindest einen rückwärtigen (ausgangsöffnungsseitige) Sicherungsabschnitt (34, 35) aufweisen, welche Sicherungsabschnitte (34, 35) in der Sicherungsposition bzw. im montierten Zustand an der Stauchung (26) des Steckelements (5) anliegen.

7. Kupplung nach Anspruch 6, **dadurch gekennzeichnet, dass** ein erster Sicherungsabschnitt (34) und ein zweiter Sicherungsabschnitt (35) vorgesehen sind, wobei die Sicherungsabschnitte (34, 35) jeweils eine quer zur Einsteckrichtung (27) des Steckelements (5) orientierte Lagerfläche (36) und eine parallel bzw. im Wesentlichen parallel zur Einsteckrichtung orientierte Mantelfläche (37a, 37b) aufweisen, wobei die Mantelflächen (37a) der ersten Sicherungsabschnitte (34) jeweils auf einer ersten Kreisbahn liegen, welche ersten Kreisbahnen von jeweils von den Mantelflächen (37b) der zweiten Sicherungsabschnitte (35) gebildeten zweiten Kreisbahnen verschieden sind.

8. Kupplung nach einem der Ansprüche 1 bis 7, **dadurch gekennzeichnet, dass** der Rückhalter (6) durch eine auf die Bohrung (3) gerichtete Kraftbeaufschlagung des Querelements (7) lediglich aus der Ausgangsposition in die Sicherungsposition verlagerbar ist, wenn der Rückhalter (6) vorzugsweise durch eine Beaufschlagung der Halteschenkel (8) durch die Stauchung (26) des Steckelements (6) in die Freigabeposition geschoben ist.

9. Kupplung nach einem der Ansprüche 1 bis 8, **dadurch gekennzeichnet, dass** die Halteschenkel (8) jeweils eine Spreizfläche (23) aufweisen, welche Spreizflächen (23) in der Ausgangsposition des Rückhalters (6) an kupplungskörperseitigen, komplementären Spreizflächen (24) anliegen und dass die komplementären Spreizflächen (24) ausgehend von einem bohrungsseitigen Ende zu einem der Bohrung (3) abgewandten Ende divergierend angeordnet sind.

10. Kupplung nach einem der Ansprüche 1 bis 9, **dadurch gekennzeichnet, dass** bei einer Verlagerung des Rückhalters (6) aus der Sicherungsposition in die Freigabeposition die Spreizflächen (23) zur Anlage an die kupplungskörperseitigen, komplementären Spreizflächen (24) bringbar sind, dass durch ein Aufeinandergleiten der rückhalterseitigen Spreizflächen (23) und der kupplungskörperseitigen Spreizflächen (24) eine Spreizkraft auf die Halteschenkel (8) ausübbar ist, dass die Halteschenkel (8) auseinander gedrückt werden und die Stauchung (26) des Steckelements (5) zwischen den Halteschenkeln (8) hindurch in Richtung der Eingangsöffnung (4) verlagerbar ist.

11. Kupplung nach einem der Ansprüche 1 bis 10, **dadurch gekennzeichnet, dass** an das Querelement (7) zwei Sicherungsarme (9) angeschlossen sind, welche Sicherungsarme (9) voneinander beabstandet sind und jeweils zwischen den Halteschenkel (8) positioniert sind, wobei an jedem Sicherungsarm (9) ein Sicherungselement (13) angeschlossen ist.

12. Kupplung nach Anspruch 11, **dadurch gekennzeichnet, dass** jeder Sicherungsarm (9) ein in die Bohrung (3) hineinragendes Kopfteil (12) aufweist, welches Kopfteil (12) das Sicherungselement (13) trägt und einen Anlageabschnitt (32) aufweist, dass das Sicherungselement (13) in der Freigabeposition des Rückhalters (6) an dem kupplungskörperseitigen, komplementären Sicherungselement (14) anliegt und dass der Anlageabschnitt (32) in der Sicherungsposition des Rückhalters (6) an der Stauchung (26) anliegt und das Steckelement (5) redundant zu den Halteschenkeln (8) in der Bohrung (3) sichert.

13. Kupplung nach einem der Ansprüche 1 bis 12, **dadurch gekennzeichnet, dass** an zumindest einem Sicherungsarm (9) zumindest ein Rastelement angeordnet ist, mit dem der Rückhalter (6) in der Sicherungsposition und/oder Ausgangsposition bzw. Freigabeposition mit dem Kupplungskörper (2) verrastbar ist.

14. Kupplung nach einem der Ansprüche 1 bis 13, **dadurch gekennzeichnet, dass** das Querelement (7) zumindest ein Manipulierelement aufweist, wobei durch eine Kraftausübung auf das Manipulierelement eine Verlagerung des Rückhalters (6) aus der Sicherungsposition in die Freigabeposition und/oder aus der Freigabeposition in die Sicherungsposition erfolgt.

15. Kupplung nach einem der Ansprüche 1 bis 14, **dadurch gekennzeichnet, dass** das Steckelement (5) lediglich mit dem in der Sicherungsposition befindlichen Rückhalter (6) in dem Kupplungskörper (2) gesichert ist, wobei der Rückhalter (6) ein Anzeiger für die funktionsfähige Aufnahme des Steckelements (5) in dem Kupplungskörper (2) ist.

## Claims

1. A coupling, in particular a coupling for a fluid line, preferably of a motor vehicle, having a coupling body (2) and a retainer (6),
the coupling body (2) having a bore (3), which bore (3) extends from an insertion element receiving end (input opening) (4) of the coupling body (2), the coupling body (2) functionally receiving an insertion element (5) when in the assembled state, said insertion element (5) extending through the input opening (4) of the coupling body (2) into the bore (3),
the retainer (6) having a transverse element (7), to which transverse element (7) two spaced apart holding limbs (8) are attached, at least one securing arm (9) being attached between the holding limbs (8) to the transverse element, the retainer (6) being mounted such that it can be displaced in the radial direction in relation to the bore (3) on the coupling body (2),
in a starting position, when the insertion element (5) is not or is not fully inserted into the coupling body (2), a free end (11) of a holding limb (8) bearing against a blocking face (22) on the coupling body side and blocking movement of the retainer (6) into the coupling body (2) into a securing position, the transverse element (7) projecting substantially out of the coupling body (2) when in the starting position,
**characterised in that**
at least one free end (11) of a holding limb (8) is arranged in a receiving hole (38) on the coupling body side when the insertion element (5) is functionally inserted into the coupling body (2) and the retainer (6) is moved into a securing position, and that the transverse element (7) is arranged substantially in a transverse element receptacle (15) in the coupling body (2) when in the securing position, in order to indicate the assembled state,
the securing arm (9) has a securing element (13), which securing element (13) interacts with a complementary securing element (14) on the coupling body side and secures the retainer (6) preferably reversibly in the coupling body (2) when in the starting position.

2. The coupling according to Claim 1, **characterised in that** the receiving holes (38) on the coupling body side are dimensioned such that a radial movement of the holding limbs (8) in relation to the bore (3) is prevented or substantially prevented by the receiving holes (38).

3. The coupling according to Claim 1 or 2, **characterised in that** at least one contact projection (41) is arranged on a surface of a holding limb (8), preferably each holding limb (8), on the input opening side, said contact projection having a side projection face (42), which side projection face (42) is oriented parallel or approximately parallel to the insertion direction (27) of the insertion element (5) and bears against a complementary projection face on the coupling body side when in the securing position.

4. The coupling according to any one of Claims 1 to 3, **characterised in that** each holding limb (8) has a free end (11), which free ends (11) each bear against a blocking face (22) on the coupling body side when in the starting position and that the free ends (11) are each arranged in a receiving hole (38) on the coupling body side when in the securing position.

5. The coupling according to any one of Claims 1 to 4, **characterised in that** the holding limbs (8) each have a preferably conical insertion face (30), wherein loading of the insertion faces (30) with an upsetting deformation (26) of the insertion element (5), which upsetting deformation (26) has a larger diameter than a tubular section (25) of the insertion element (5), causes the holding limbs (8) to spread and the retainer (6) to be moved in the radial direction from the starting position into a release position, wherein the transverse element (7) of the retainer (6) is moved away from the coupling body (2) when the retainer (6) moves from the starting position into the release position.

6. The coupling according to any one of Claims 1 to 5, **characterised in that** the holding limbs (8) each have at least one rear (on the output opening side) securing section (34, 35), which securing sections (34, 35) bear against the upsetting deformation (26) of the insertion element (5) when in the securing position and in the assembled state.

7. The coupling according to Claim 6, **characterised in that** a first securing section (34) and a second securing section (35) are provided, wherein the securing sections (34, 35) each have a bearing face (36), which is oriented transversely to the insertion direction (27) of the insertion element (5), and a lateral face (37a, 37b), which is oriented parallel or substantially parallel to the insertion direction, wherein the lateral faces (37a) of the first securing sections (34) are each situated on a first circular path, which first circular paths differ from second circular paths each formed by the lateral faces (37b) of the second securing sections (35).

8. The coupling according to any one of Claims 1 to 7, **characterised in that** the retainer (6) can be moved only from the starting position into the securing position by means of an application of force to the transverse element (7) directed at the bore (3) when the retainer (6) is preferably pushed into the release position by loading the holding limbs (8) with the upsetting deformation (26) of the insertion element (6).

9. The coupling according to any one of Claims 1 to 8, **characterised in that** the holding limbs (8) each have a spreading face (23), which spreading faces (23) bear against complementary spreading faces (24) on the coupling body side when the retainer (6) is in the starting position, and that the complementary spreading faces (24) are arranged in a divergent manner starting from an end on the bore side to an end remote from the bore (3).

10. The coupling according to any one of Claims 1 to 9, **characterised in that** when the retainer (6) is moved from the securing position into the release position, the spreading faces (23) can be brought to bear against the complementary spreading faces (24) on the coupling body side, that a spreading force can be exerted on the holding limbs (8) as a result of the sliding on each other of the spreading faces (23) on the retainer side and the spreading faces (24) on the coupling body side, that the holding limbs (8) are pressed apart and the upsetting deformation (26) of the insertion element (5) can be moved through between the holding limbs (8) in the direction of the input opening (4).

11. The coupling according to any one of Claims 1 to 10, **characterised in that** two securing arms (9) are attached to the transverse element (7), which securing arms (9) are spaced apart from each other and are each positioned between the holding limbs (8), wherein a securing element (13) is attached to each securing arm (9).

12. The coupling according to Claim 11, **characterised in that** each securing arm (9) has a head part (12), which head part (12) projects into the bore (3), supports the securing element (13) and has a contact section (32), that the securing element (13) bears against the complementary securing element (14) on the coupling body side when the retainer (6) is in the release position and that the contact section (32) bears against the upsetting deformation (26) and secures the insertion element (5) in the bore (3) redundantly to the holding limbs (8) when the retainer (6) is in the securing position.

13. The coupling according to any one of Claims 1 to 12, **characterised in that** at least one locking element is arranged on at least one securing arm (9), with which locking element the retainer (6) can be locked to the coupling body (2) in the securing position and/or starting position or release position.

14. The coupling according to any one of Claims 1 to 13, **characterised in that** the transverse element (7) has at least one manipulation element, wherein the retainer (6) is moved out of the securing position into the release position and/or out of the release position into the securing position by exertion of force onto the manipulation element.

15. The coupling according to any one of Claims 1 to 14, **characterised in that** the insertion element (5) is secured in the coupling body (2) only with the retainer (6) in the securing position, wherein the retainer (6) is an indicator that the insertion element (5) is received functionally in the coupling body (2).

## Revendications

1. Accouplement, notamment accouplement pour une conduite de fluide, de préférence d'un véhicule automobile, avec un corps d'accouplement (2) et un élément de retenue (6),
le corps d'accouplement (2) comportant un alésage (3), lequel alésage (3) s'étend depuis une extrémité de logement d'élément emboîtable (ouverture d'entrée) (4) du corps d'accouplement (2), le corps d'accouplement (2) recevant à l'état monté un élément emboîtable (5) pouvant fonctionner, lequel élément emboîtable (5) s'étend à travers l'ouverture d'entrée (4) du corps d'accouplement (2) dans l'alésage (3),
l'élément de retenue (6) comportant un élément transversal (7), élément transversal (7) sur lequel sont raccordés deux branches de fixation (8) à distance l'une de l'autre, au moins un bras de fixation (9) étant raccordé à l'élément transversal entre les branches de fixation (8), l'élément de retenue(6) étant logé sur le corps d'accouplement (2) pouvant se déplacer en direction radiale par rapport à l'alésage (3),
dans une position initiale, lorsque l'élément emboîtable (5) n'est pas ou est incomplètement introduit dans le corps d'accouplement (2), une extrémité libre (11) d'une branche de fixation (8) venant s'appliquer à une surface de blocage (22) du côté du corps d'accouplement et bloquer un déplacement de l'élément de retenue (6) dans le corps d'accouplement (2) dans une position de fixation, l'élément transversal (7) ressortant pour l'essentiel du corps d'accouplement (2) dans la position initiale, **caractérisé en ce qu'**
au moins une extrémité libre (11) d'une branche de fixation (8) est disposée dans une cavité de réception (38) du côté du corps d'accouplement, lorsque l'élément emboîtable (5) est introduit pouvant fonctionner dans le corps d'accouplement (2) et l'élément de retenue (6) est déplacé dans une position de fixation et **en ce que** l'élément transversal (7) est disposé dans la position de fixation pour indiquer l'état monté pour l'essentiel dans un logement d'élément transversal (15) du corps d'accouplement (2),
**en ce que** le bras de fixation (9) comporte un élément de fixation (13), lequel élément de fixation (13) coopère dans la position initiale avec un élément de fixation (14) complémentaire du côté du corps d'accouplement et l'élément de retenue (6) se bloque de préférence de façon réversible dans le corps d'accouplement (2).

2. Accouplement selon la revendication 1, **caractérisé en ce que** les cavités de réception (38) du côté du corps d'accouplement sont dimensionnées de telle manière qu'un déplacement radial des branches de fixation (8) à travers les cavités de réception (38) par rapport à l'alésage (3) est empêché ou pour l'essentiel empêché.

3. Accouplement selon la revendication 1 ou 2, **caractérisé en ce que** sur une surface d'une branche de fixation (8) du côté de l'ouverture d'entrée, de préférence de chaque branche de fixation (8), est disposée au moins une saillie d'appui (41) avec une surface de saillie (42) latérale, orientée parallèlement ou à peu près parallèlement à la direction d'emboîtage (27) de l'élément emboîtable (5), laquelle surface de saillie latérale (42) vient s'appliquer à la position de fixation à une surface de saillie complémentaire du côté du corps d'accouplement.

4. Accouplement selon l'une quelconque des revendications 1 à 3, **caractérisé en ce que** chaque branche de fixation (8) comporte une extrémité libre (11), lesquelles extrémités libres (11) viennent s'appliquer respectivement dans la position initiale à une surface de blocage (22) du côté du corps d'accouplement et **en ce que** les extrémités libres (11) sont respectivement disposées dans la position de fixation dans une cavité de réception (38) du côté du corps d'accouplement.

5. Accouplement selon l'une quelconque des revendications 1 à 4, **caractérisé en ce que** les branches de fixation (8) comportent respectivement une surface d'introduction (30) de préférence conique, une sollicitation des surfaces d'introduction (30) avec un élément de compression (26) de l'élément emboîtable (5), lequel élément de compression (26) comporte un diamètre plus grand qu'un tronçon de tube (25) de l'élément emboîtable (5), cause un écartement des branches de fixation (8) et un déplacement de l'élément de retenue (6) en direction radiale de la position initiale dans une position de déblocage, l'élément transversal (7) de l'élément de retenue(6) étant éloigné du corps d'accouplement (2) lors du déplacement de l'élément de retenue(6) de la position initiale dans la position de déblocage.

6. Accouplement selon l'une quelconque des revendications 1 à 5, **caractérisé en ce que** les branches de fixation (8) comportent respectivement au moins un tronçon de fixation (34, 35) arrière (du côté de l'ouverture de sortie), lesquels tronçons de fixation (34, 35) venant s'appliquer à l'élément de compression (26) de l'élément emboîtable (5) à la position de fixation ou à l'état monté.

7. Accouplement selon la revendication 6, **caractérisé en ce qu'**un premier tronçon de fixation (34) et un deuxième tronçon de fixation (35) sont prévus, les tronçons de fixation (34, 35) comportant respectivement une surface d'appui (36) orientée transversalement à la direction d'emboîtement (27) de l'élément emboîtable (5) et une surface d'enveloppe (37a, 37b) orientée parallèlement ou pour l'essentiel à peu près parallèlement à la direction d'emboîtement, les surfaces d'enveloppe (37a) des premiers tronçons de fixation (34) venant respectivement s'appliquer à une première piste circulaire , lesquelles premières pistes circulaires étant différentes des deuxièmes pistes circulaires formées respectivement par les surfaces d'enveloppe (37b) des deuxièmes tronçons de fixation (35).

8. Accouplement selon l'une quelconque des revendications 1 à 7, **caractérisé en ce que** l'élément de retenue (6) ne peut être déplacé que par une application de force de l'élément transversal (7) orientée sur l'alésage (3) de la position initiale dans la position de fixation, lorsque l'élément de retenue (6) est déplacé de préférence par une sollicitation des branches de fixation (8) par l'élément de compression (26) de l'élément emboîtable (6) dans la position de déblocage.

9. Accouplement selon l'une quelconque des revendications 1 à 8, **caractérisé en ce que** les branches de fixation (8) comportent respectivement une surface d'écartement (23), lesquelles surfaces d'écartement (23) viennent s'appliquer dans la position initiale de l'élément de retenue (6) à des surfaces d'écartement (24) complémentaires du côté du corps d'accouplement et **en ce que** les surfaces d'écartement (24) complémentaires sont disposées de manière divergente en partant d'une extrémité côté de l'alésage vers une extrémité éloignée de l'alésage (3).

10. Accouplement selon l'une quelconque des revendications 1 à 9, **caractérisé en ce que** lors du déplacement de l'élément de retenue(6) de la position de fixation dans la position de déblocage, les surfaces d'écartement (23) peuvent être mises pour appui sur les surfaces d'écartement (24) complémentaires du côté du corps d'accouplement, **en ce que** par un glissement l'une sur l'autre des surfaces d'écartement (23) du côté de l'élément de retenue et des surfaces d'écartement (24) du côté du corps d'accouplement, il est possible d'exercer une force d'écartement sur les branches de fixation (8), **en ce que** les branches de fixation (8) sont comprimées distantes l'une de l'autre et l'élément de compression (26) de l'élément emboîtable (5) peut être déplacé entre les branches de fixation (8) en direction de l'ouverture d'entrée (4).

11. Accouplement selon l'une quelconque des revendications 1 à 10, **caractérisé en ce que** deux bras de fixation (9) sont raccordés à l'élément transversal (7), lesquels bras de fixation (9) sont distants l'un de l'autre et sont positionnés respectivement entre les branches de fixation (8), un élément de fixation (13) étant raccordé à chaque bras de fixation (9).

12. Accouplement selon la revendication 11, **caractérisé en ce que** chaque bras de fixation (9) comporte une partie de tête (12) pénétrant dans l'alésage (3), laquelle partie de tête (12) porte un élément de fixation (13) et comporte un tronçon d'appui (32), **en ce que** l'élément de fixation (13) vient s'appliquer dans la position de déblocage de l'élément de retenue (6) à l'élément de fixation (14) complémentaire du côté du corps d'accouplement et **en ce que** le tronçon d'appui (32) vient s'appliquer dans la position de fixation de l'élément de retenue(6) à l'élément de compression (26) et l'élément emboîtable (5) se fixe de façon redondante aux branches de fixation (8) dans l'alésage (3).

13. Accouplement selon l'une quelconque des revendications 1 à 12, **caractérisé en ce qu'**au moins un élément d'encliquetage est disposé sur au moins un bras de fixation (9) avec lequel l'élément de retenue (6) peut être encliqueté avec le corps d'accouplement (2) dans la position de fixation et/ou position initiale ou position de déblocage.

14. Accouplement selon l'une quelconque des revendications 1 à 13, **caractérisé en ce que** l'élément transversal (7) comporte au moins un élément de manipulation, un déplacement de l'élément de retenue (6) de la position initiale dans la position de déblocage et/ou de la position de déblocage dans la position de fixation ayant lieu par l'exercice d'une force sur l'élément de manipulation.

15. Accouplement selon l'une quelconque des revendications 1 à 14, **caractérisé en ce que** l'élément emboîtable (5) n'est fixé dans le corps d'accouplement (2) qu'avec l'élément de retenue (6) se trouvant dans la position de fixation, l'élément de retenue (6) étant un indicateur pour le logement pouvant fonctionner de l'élément emboîtable (5) dans le corps d'accouplement (2).
